# EUROPÄISCHE PATENTSCHRIFT

(11) **EP 3 963 291 B1**
(45) Veröffentlichungstag und Bekanntmachung des Hinweises auf die Patenterteilung: **23.08.2023**
(21) Anmeldenummer: 20732744.6
(22) Anmeldetag: 25.05.2020
(51) Int. Cl.: G01D 3/08, B60T 17/18, B60T 17/22, B60T 13/66, F16D 66/00

(54) **SENSORANORDNUNG ZUM ÜBERWACHEN EINES TECHNISCHEN SYSTEMS UND VERFAHREN ZUM BETREIBEN EINER SENSORANORDNUNG**
SENSOR ARRAY FOR MONITORING A TECHNICAL SYSTEM, AND METHOD FOR OPERATING A SENSOR ARRAY
ENSEMBLE CAPTEUR CONÇU POUR SURVEILLER UN SYSTÈME TECHNIQUE ET PROCÉDÉ POUR FAIRE FONCTIONNER UN ENSEMBLE CAPTEUR

(30) Priorität: 14.06.2019 DE 102019208669
(43) Veröffentlichungstag der Anmeldung: 09.03.2022
(73) Patentinhaber: Siemens Mobility GmbH, 81739 München (DE)
(72) Erfinder: STINGL, Bernhard Andreas, 47803 Krefeld (DE); WENNEKAMP, Fabian, 45131 Essen (DE)
(74) Vertreter: Siemens Patent Attorneys
(86) Internationale Anmeldenummer: PCT/EP2020/064417
(87) Internationale Veröffentlichungsnummer: WO 2020/249381

(56) Entgegenhaltungen:
- EP-A1- 1 750 095
- DE-A1- 10 229 702
- DE-A1-102004 055 240
- DE-A1-102006 037 851
- DE-A1-102007 037 298

## Beschreibung

Die Erfindung bezieht sich auf Sensoranordnungen und Verfahren zu deren Betrieb.

Bei bekannten Sensoranordnungen mit redundant arbeitenden Sensoren werden Sensorsignale nur dann berücksichtigt, wenn die Sensoren als funktionstüchtig angesehen werden; andernfalls bleiben deren Sensorsignale unberücksichtigt. Wird eine vorgegebene Anzahl an funktionstüchtigen Sensoren unterschritten, wird die Sensoranordnung als defekt angesehen.

EP 1 750 095 A1 und DE 10 2007 037298 A1 zeigen bekannte Sensoranordnungen.

Der Erfindung liegt die Aufgabe zugrunde, ein gegenüber vorbekannten Verfahren verbessertes Verfahren zum Betreiben von Sensoranordnungen anzugeben.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass jedem der Sensoren jeweils eine Vertrauensangabe zugeordnet wird, die die Vertrauenswürdigkeit des Sensorsignals des jeweiligen Sensors angibt, wobei die Vertrauensangabe anzeigt, ob der Sensor als vertrauenswürdig anzusehen und dessen Sensorsignal verwertbar ist, der Sensor als nicht vertrauenswürdig anzusehen und dessen Sensorsignal nichtverwertbar ist oder der Sensor als eingeschränkt vertrauenswürdig anzusehen und dessen Sensorsignal eingeschränkt verwertbar ist, und die Auswerteinrichtung eine den Zustand des Systems beschreibende Zustandsangabe ausschließlich auf der Basis der vertrauenswürdigen Sensoren sowie derjenigen eingeschränkt vertrauenswürdigen Sensoren, die mindestens eine vorgegebene zusätzliche Bedingung erfüllen, erzeugt.

Ein wesentlicher Vorteil des erfindungsgemäßen Verfahrens ist darin zu sehen, dass die Auswerteinrichtung mit einer größeren Wahrscheinlichkeit eine den Zustand des Systems beschreibende Zustandsangabe korrekt erzeugt. Die größere Wahrscheinlichkeit der Korrektheit der Zustandsangabe wird insbesondere dadurch erreicht, dass eingeschränkt vertrauenswürdige bzw. nicht vertrauenswürdige Sensoren nur eingeschränkt bzw. keine Verwendung finden.

Vorteilhaft ist es, wenn die Vertrauensangaben regelmäßig oder unregelmäßig, insbesondere stochastisch, neu ermittelt und/oder aktualisiert werden.

Die Vertrauensangaben werden anhand des zeitlichen Verlaufs der Sensorsignale neu ermittelt und/oder aktualisiert.

Neu ermittelt und/oder aktualisiert werden die Vertrauensangaben besonders bevorzugt zumindest auch anhand des zeitlichen Verlaufs der Sensorsignale relativ im Vergleich zueinander und/oder unter Berücksichtigung des jeweiligen (beispielsweise aus anderer Quelle bekannten) Systemzustands des technischen Systems bei der Aufnahme des zeitlichen Verlaufs.

Die mindestens eine vorgegebene zusätzliche Bedingung oder eine der vorgegebenen zusätzlichen Bedingungen wird vorzugsweise als erfüllt angesehen, wenn vor dem Auftreten eines ein vorgegebenes Kontrollkriterium erfüllenden Sensorsignals die Vertrauensangabe des jeweiligen Sensors ein Ansteigen der Vertrauenswürdigkeit für eine vorgegebene Prüfzeitspanne vor dem Auftreten dieses Sensorsignals, also des das Erfüllen des Kontrollkriteriums anzeigenden Sensorsignals, anzeigt.

Im Falle von Temperatursensoren kann das vorgegebene Kontrollkriterium beispielsweise eine Grenztemperatur oder eine Maximaltemperatur sein, die von dem technischen System nicht überschritten werden soll oder darf.

Auch ist es vorteilhaft, wenn die mindestens eine vorgegebene zusätzliche Bedingung oder eine der vorgegebenen zusätzlichen Bedingungen als erfüllt angesehen wird, wenn nach dem Auftreten eines ein vorgegebenes Kontrollkriterium erfüllenden Sensorsignals die Vertrauensangabe des jeweiligen Sensors ein Ansteigen der Vertrauenswürdigkeit für eine vorgegebene Mindestzeitspanne nach dem Auftreten dieses Sensorsignals, also des das Erfüllen des Kontrollkriteriums anzeigenden Sensorsignals, anzeigt.

Alternativ oder zusätzlich kann in vorteilhafter Weise vorgesehen sein, dass die mindestens eine vorgegebene zusätzliche Bedingung oder eine der vorgegebenen zusätzlichen Bedingungen als erfüllt angesehen wird, wenn nach dem Auftreten eines ein vorgegebenes Kontrollkriterium erfüllenden Sensorsignals die Vertrauensangabe des jeweiligen Sensors ansteigt und innerhalb einer vorgegebenen Mindestzeitspanne eine vorgegebene Mindestvertrauensschwelle erreicht.

Die vorgegebene Mindestvertrauensschwelle ist vorzugsweise diejenige Schwelle, ab der der Sensor als vertrauenswürdig angesehen wird.

Alternativ oder zusätzlich kann in vorteilhafter Weise vorgesehen sein, dass die mindestens eine vorgegebene zusätzliche Bedingung oder eine der vorgegebenen zusätzlichen Bedingungen als erfüllt angesehen wird, wenn nach Auftreten eines ein vorgegebenes Kontrollkriterium erfüllenden Sensorsignals das Sensorsignal das Kontrollkriterium innerhalb einer vorgegebenen Mindestzeitspanne danach weiterhin oder zumindest innerhalb der vorgegebenen Mindestzeitspanne wiederholt erfüllt.

Die vorgegebene Mindestzeitspanne ist vorzugsweise eine Gefahrenzeitspanne des technischen Systems, innerhalb derer nach Erkennen einer Gefahrensituation, insbesondere nach Erfüllung des vorgegebenen Kontrollkriteriums, eine Nothandlung vorzunehmen ist, oder eine Teilzeitspanne dieser Gefahrenzeitspanne.

Die Auswerteinrichtung weist bevorzugt eine Eingabeschnittstelle auf, an der ein Sollmesswert für einen, mehrere oder alle Sensoren der Sensoranordnung eingebbar ist.

Vorteilhaft ist es, wenn die Auswerteinrichtung anhand des Sollmesswerts die Vertrauensangabe für den oder die jeweiligen Sensoren neu berechnet oder aktualisiert.

Alternativ oder zusätzlich kann die Auswerteinrichtung eine Eingabeschnittstelle aufweisen, an der eine Vertrauensangabe für einen, mehrere oder alle Sensoren der Sensoranordnung eingebbar ist. Die Auswerteinrichtung ordnet vorzugsweise den jeweiligen Sensoren die eingegebene Vertrauensangabe zu.

Darüber hinaus wird es vorteilhaft angesehen, wenn die Auswerteinrichtung eine lernende Recheneinrichtung ist oder aufweist, die die Ermittlung der Vertrauensangaben unter Berücksichtung einer fest vorgegebenen Plausibilisierungsstrategie und/oder unter Berücksichtung einer selbst ermittelten Plausibilisierungsstrategie durchführt.

Das technische System ist vorzugsweise eine Bremsanlage eines Fahrzeugs.

Die zumindest zwei Sensoren sind vorzugsweise Temperatursensoren, die die Temperatur der Bremsanlage oder eines anderen Teils eines Fahrzeugs, insbesondere eines Radlagers, das einen von der Bremsanlage bremsbaren Radsatz oder ein von der Bremsanlage bremsbares Rad des Fahrzeugs lagert, misst und als Sensorsignal ein Temperatursignal erzeugt.

Das oben genannte Kontrollkriterium ist vorzugsweise eine Temperaturangabe, insbesondere eine solche, die eine für ein Achslager maximal erlaubte Grenztemperatur angibt.

Die Erfindung bezieht sich außerdem auf eine Sensoranordnung mit zumindest zwei Sensoren und einer Auswerteinrichtung zum Überwachen eines technischen Systems, wobei die Auswerteinrichtung die Sensorsignale der zumindest zwei Sensoren auswerten kann. Erfindungsgemäß ist diesbezüglich vorgesehen, dass die Auswerteinrichtung dazu ausgebildet ist, jedem der Sensoren jeweils eine Vertrauensangabe zuzuordnen, die die Vertrauenswürdigkeit des Sensorsignals des Sensors angibt, wobei die Vertrauensangabe anzeigt, ob der Sensor als vertrauenswürdig anzusehen und dessen Sensorsignal verwertbar ist, der Sensor als nicht vertrauenswürdig anzusehen und dessen Sensorsignal nichtverwertbar ist oder der Sensor als eingeschränkt vertrauenswürdig anzusehen und dessen Sensorsignal eingeschränkt verwertbar ist, und die Auswerteinrichtung außerdem dazu ausgebildet ist, eine den Zustand des Systems beschreibende Zustandsangabe ausschließlich auf der Basis der vertrauenswürdigen Sensoren sowie derjenigen eingeschränkt vertrauenswürdigen Sensoren, die mindestens eine vorgegebene zusätzliche Bedingung erfüllen, zu erzeugen.

Bezüglich der Vorteile der erfindungsgemäßen Sensoranordnung sowie bezüglich vorteilhafter Ausgestaltungen der erfindungsgemäßen Sensoranordnung sei auf die obigen Ausführungen im Zusammenhang mit dem oben beschriebenen Verfahren verwiesen.

Die Erfindung bezieht sich außerdem auf ein Fahrzeug, das mit einer solchen Sensoranordnung ausgestattet ist.

Die Erfindung wird nachfolgend anhand von Ausführungsbeispielen näher erläutert, dabei zeigen beispielhaft
- Figur 1: ein Ausführungsbeispiel für eine erfindungsgemäße Sensoranordnung, anhand derer Ausführungsbeispiele für das erfindungsgemäße Verfahren erläutert werden,
- Figur 2: den zeitlichen Verlauf von Vertrauenswerten über der Zeit t,
- Figur 3: ein Beispiel für eine Plausibilisierung von Vertrauenswerten und
- Figur 4: ein Schienenfahrzeug, bei dem die Sensoranordnung gemäß Figur 1 für eine Heißläufererkennung eingesetzt wird.

In den Figuren werden für identische oder vergleichbare Komponenten stets dieselben Bezugszeichen verwendet.

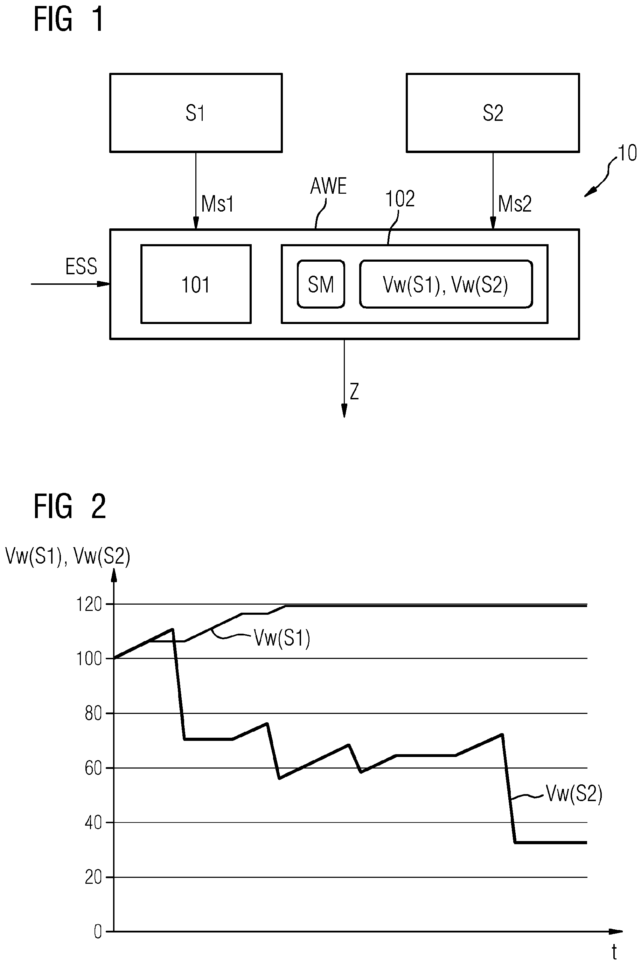

Die Figur 1 zeigt eine Sensoranordnung 10, die zum Überwachen eines nicht weiter gezeigten technischen Systems geeignet ist. Die Auswerteinrichtung umfasst zwei Sensoren S1 und S2 und eine mit den zwei Sensoren S1 und S2 verbundene Auswerteinrichtung AWE. Die Auswerteinrichtung AWE umfasst eine Recheneinrichtung 101 und einen Speicher 102, in dem unter anderem ein die Arbeitsweise der Auswerteinrichtung AWE festlegendes Softwaremodul SM abgespeichert ist.

Die Auswerteinrichtung AWE ist dazu ausgebildet, jedem der Sensoren S1 bzw. S2 jeweils eine Vertrauensangabe in Form eines Vertrauenswerts zuzuordnen. In der Figur 1 ist der Vertrauenswert für den Sensor S1 mit dem Bezugszeichen Vw(S1) und der Vertrauenswert für den Sensor S2 mit dem Bezugszeichen Vw(S2) bezeichnet. Die Vertrauenswerte Vw(S1) und Vw(S2) werden vorzugsweise in dem Speicher 102 abgespeichert.

Die Vertrauenswerte Vw(S1) und Vw(S2) geben die Vertrauenswürdigkeit der Sensorsignale Ms1 und Ms2 der Sensoren S1 und S2 an. Die Vertrauenswerte Vw(S1) und Vw(S2) zeigen konkret jeweils an, ob bzw. in welchem Maße der Sensor S1 bzw. S2 als vertrauenswürdig anzusehen ist und dessen Sensorsignal Ms1 bzw. Ms2 verwertbar ist. Die Auswerteinrichtung AWE erzeugt eine den Zustand des nicht weiter gezeigten technischen Systems beschreibende Zustandsangabe Z ausschließlich auf der Basis solcher Sensoren, die uneingeschränkt vertrauenswürdig sind oder zumindest eingeschränkt vertrauenswürdig sind, sofern letztere mindestens eine vorgegebene zusätzliche Bedingung erfüllen.

Die Auswerteinrichtung AWE kann eine Eingabeschnittstelle ESS aufweisen, an der ein Sollmesswert für die Sensoren S1 und S2 und/oder Vertrauensangaben Vw(S1) und Vw(S2) für die Sensoren S1 und S2 eingebbar sind.

Nachfolgend soll anhand von Beispielen erläutert werden, wie die Anordnung gemäß Figur 1 arbeiten oder ausgestaltet sein kann; die nachfolgenden Ausführungen sind nur beispielhaft zu verstehen und können in vielfältiger Form kombiniert oder modifiziert werden:

Bei der Sensoranordnung 10 gemäß der Figur 1 ist es möglich, die Plausibilisierung der Sensoren S1, S2 um eine Überprüfung auf plausibles Verhalten zu erweitern und eine historische Komponente zu berücksichtigen. Damit kann jedem durch einen Sensor gebildeten Sensorkanal, nachfolgend auch nur kurz Kanal genannt, eines Überwachungssystems ein Vertrauenswert zugewiesen werden, der mit einer kontinuierlichen oder diskreten Skala zwischen "defekt" und "sehr wahrscheinlich vollständig funktionsfähig" beschreibt, mit welcher Wahrscheinlichkeit dieser Kanal einen wahrheitsgemäßen Messwert bereitstellt.

Je länger ein Sensor plausibles oder unplausibles Verhalten zeigt, desto mehr verschiebt sich dieser Vertrauenswert in die entsprechende Richtung. Bei einem offensichtlichen Sensorfehler ist auch ein sprunghaftes und dauerhaftes Setzen auf "defekt" und die dauerhafte Ausgruppierung möglich.

Auf Basis dieses Vertrauenswertes wird entschieden, ob der jeweilige Sensor bei der Auswertung berücksichtigt wird oder nicht. Bei geeigneter Gestaltung steht damit ebenfalls eine sicherheitsbelastbare Entscheidungsbasis bereit, anhand derer bei einem einkanaligen Alarm entschieden werden kann, ob von einem realem bzw. echtem Alarm oder einem Fehlalarm auszugehen ist. Auch ist denkbar, dass ein einkanaliger Alarm durch einen wenig vertrauenswürdigen Kanal für eine definierte Zeit ignoriert wird. Eine geeignete Gestaltung ermöglicht ebenfalls, dass diese erweiterte Plausibilisierung ohne Information des jeweils anderen Kanals erfolgen kann, so dass die Forderung nach der Unabhängigkeit erfüllt bleibt.

Eine mögliche Umsetzung der technischen Lösung soll nachfolgend anhand eines konkreten Beispiels näher verdeutlich werden:
Zwei Sensoren S1 und S2 gemäß Figur 1 erhalten nach Einbau zunächst den Vertrauenswert 100 (entspricht: "sehr wahrscheinlich vollständig funktionsfähig"). Im Betrieb zeigen beide Sensoren zunächst ein plausibles Verhalten, das auch dem erwarteten (Änderungs-) Verhalten entspricht. Damit kann der Vertrauenswert bis zu einem Maximum von 120 steigen. Zeigt ein Sensor vorübergehend unplausibles Verhalten und wird ggf. sogar temporär ausgruppiert, so sinkt sein Vertrauenswert.

Die Figur 2 zeigt beispielhaft den zeitlichen Verlauf der Vertrauenswerte Vw(S1) und Vw(S2) über der Zeit t. In dem in der Figur 2 gezeigten Beispiel führen verschiedene Ereignisse zu verschiedenen Abzügen der Vertrauenspunkte. Zeigt ein Sensor wieder ein plausibles Verhalten, steigen entsprechend auch die Vertrauenspunkte.

Einkanalige Zustandsmeldungen (Alarme) von Sensoren über 80 Vertrauenspunkten werden vorzugsweise als gültig angesehen, da der Sensor hier "sehr wahrscheinlich" (100 - 120 Vertrauenspunkte) bzw. "wahrscheinlich" (80 - 99 Vertrauenspunkte) "vollständig funktionsfähig" ist. Hat ein Sensor 40 bis 79 Vertrauenspunkte, wird er vorzugsweise als "vorbehaltlich funktionsfähig" angesehen.

Einkanalige Meldungen von Sensoren werden, wenn der zweite Kanal über 80 Vertrauenspunkte hat und abweichende Messwerte meldet, vorzugsweise erst bei wiederholter bzw. dauerhafter Meldung als gültig angesehen. Die Zusammenführung der Kanäle mit ihren jeweiligen Vertrauenspunkten erfolgt vorzugsweise in einer übergeordneten Instanz. Sensoren mit weniger als 40 Vertrauenspunkten werden vorzugsweise als defekt markiert.

Eine geeignete Gestaltung dieses Ansatzes setzt voraus, dass für die betrachtete Überwachungsfunktion geeignete Kriterien gefunden werden können, aus denen auf ein plausibles Verhalten des jeweiligen Sensors geschlossen werden kann. Dazu sind die relevanten betrieblichen Einflussgrößen auf die Messgröße des Überwachungssystems zu identifizieren.

Exemplarisch soll im Folgenden die Heißläuferüberwachung bei Schienenfahrzeugen betrachtet werden, bei der der Zustand der Radsatzlager mittels Temperaturmessung überwacht wird. Die Temperatur der Radsatzlager folgt im Wesentlichen aus der Dissipation im Inneren des Lagers und den Randbedingungen, welche die Wärmeübertragung an die Umgebung definieren. Für ersteres sind unter anderem die Fahrgeschwindigkeit und der Verschleiß- und Wartungszustand des Lagers zu nennen. Äußere Randbedingungen sind unter anderem die Luftumströmung (Fahrgeschwindigkeit), die Umgebungstemperatur und die Sonneneinstrahlung. Damit bietet sich insbesondere die Prüfung an, ob sich der Temperaturmesswert eines Lagers konsistent zur Umgebungstemperatur und zur Fahrgeschwindigkeit ändert. Ergänzend kommt ein Vergleich mit dem Temperaturverlauf anderer Lager im Fahrzeug in Betracht. Hierbei ist zu beachten, dass nicht alle Lager eines Schienenfahrzeugs oder Zuges eine ähnliche Temperatur aufweisen: Abweichungen innerhalb des Schienenfahrzeugs oder Zuges können z. B. durch eine unterschiedliche Fettung oder Lagervorspannung bei Kegelrollenlagern entstehen. Daher sollte sich diese vergleichende Plausibilisierung nicht auf die Absolutwerte stützen, sondern Änderungsraten betrachten, die sich in ähnlicher Weise aus den gemeinsamen betrieblichen Parametern (Geschwindigkeit, Umgebungstemperatur) ergeben. In besonderer Weise ist vorzugsweise zu beachten, dass das Ausfallverhalten eines Lagers nicht als unplausibles Verhalten gewertet wird.

Zur positiven Plausibilisierung bietet sich insbesondere das Abkühlverhalten im Stillstand an. Der Reibleitungseintrag ist offensichtlich null, so dass auf eine sinnvolle Abkühlung des Lagers geprüft werden kann. Die äußeren Parameter wie z. B. die Umgebungstemperatur können ggf. über eine gemeinsame zugweite Auswertung aller Sensoren eines Kanals ermittelt werden.

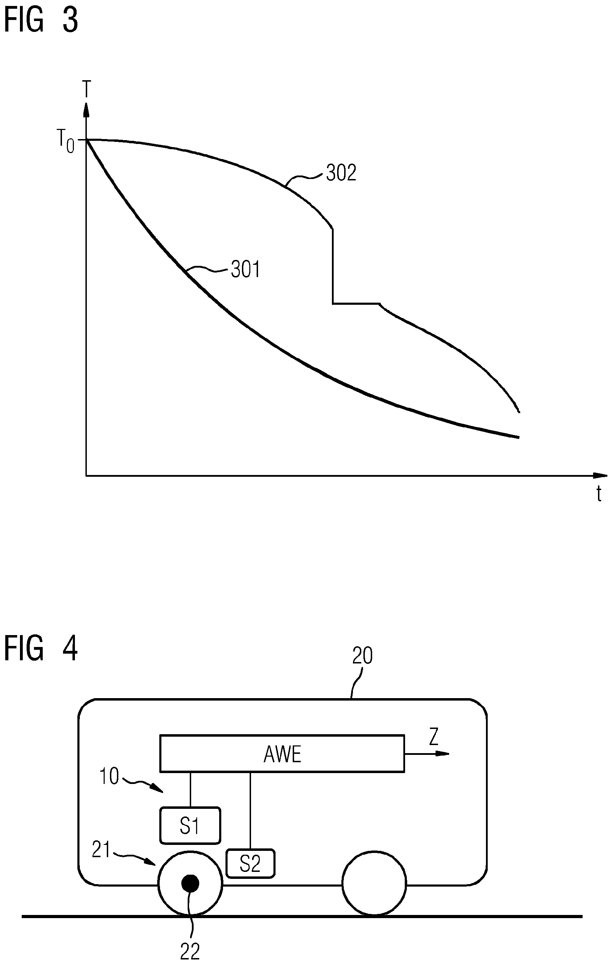

Die Figur 3 zeigt ein Beispiel für eine Plausibilisierung im Stillstand. Die Kurve 301 in Figur 3 zeigt einen plausiblen Temperaturverlauf T eines Radsatzlagers im Stillstand im Anschluss an einen üblichen Betriebseinsatz über der Zeit t: Entsprechend der Wärmeabgabe an die Umgebung ergibt sich im Wesentlichen eine exponentielle Temperaturabnahme ausgehend von einer Ausgangstemperatur T0. Dabei kann berücksichtigt werden, dass die Zeitkonstante der exponentiellen Abnahme bei einer Veränderung der Umgebungsbedingungen veränderlich sein kann. Der Vertrauenswert eines Sensors, der im Stillstand einen nahezu exponentiellen Temperaturverlauf aufweist, kann erhöht werden.

Die Kurve 302 in Figur 3 zeigt zum Vergleich das Messsignal eines defekten Sensors, dessen Messsignalverlauf keinerlei Ähnlichkeit mit einer exponentiellen Abnahme aufweist: Der Vertrauenswert dieses Sensors wird demgemäß vorzugsweise reduziert.

Eine mögliche Erweiterung bzw. Variante des oben beschriebenen Verfahrens besteht in der manuellen Eingabe eines Vertrauenswertes. Unter anderem bei der Heißläuferüberwachung ist die manuelle Überprüfung der Radsatzlagertemperatur im Alarmfall möglich, nach welcher die Heißläuferüberwachung ggf. ausgeschaltet wird. Hier besteht nun die Möglichkeit, dass das Betriebs- oder Instandhaltungspersonal nach manueller Prüfung einen neuen Vertrauenswert für einen oder mehrere Kanäle in das Überwachungssystem eingibt.

Eine andere Erweiterung bzw. Variante des oben beschriebenen Verfahrens besteht in der Möglichkeit, das Überwachungssystem manuell mittels einer Eingabemaske mit einer manuellen, systemunabhängigen Beobachtung des Systemzustandes zu versorgen. So könnte beispielsweise die manuelle Eingabe einer Radsatzlagertemperatur vom Überwachungssystem zum Update des Vertrauenswertes beider Kanäle genutzt werden.

Änderungen der Vertrauenswerte können beispielweise im Rahmen der Instandhaltung erfolgen.

Neben der Definition und Parametrierung dieser Kriterien beim Entwurf des Überwachungssystems können auch selbstlernende Systeme in Frage kommen. Hierbei können zwei Varianten unterschieden werden: Eine Möglichkeit ist beispielsweise die Vorgabe der Struktur der Plausibilisierungskriterien; dabei wird lediglich die Ermittlung der geeigneten Parameter dem selbstlernenden System überlassen. Ein andere Variante schließt die Ermittlung der Struktur in das selbstlernende System mit ein. In beiden Fällen werden vorzugsweise zuvor die relevanten betrieblichen Einflussparameter auf den Messwert identifiziert und beim Design des selbstlernenden Systems berücksichtigt. Eine Erweiterung dieses selbstlernenden Ansatzes kann die zentrale Auswertung von Informationen einer ganzen Flotte mit einschließen. Die so gewonnenen Erkenntnisse fließen vorzugsweise über eine automatische Datenübertragung in die Überwachungssysteme der einzelnen Fahrzeuge zurück.

Im ersten Schritt können auf Grundlage einer flottenübergreifenden (vergleichenden) Analyse auf landseitigen Systemen die Vertrauenswerte in einem konkreten Fahrzeug bzw. einem konkreten Sensor verändert werden.

Die Figur 4 zeigt ein Ausführungsbeispiel für ein Schienenfahrzeug 20, das mit einer Sensoranordnung, beispielsweise der Sensoranordnung 10 gemäß Figur 1, ausgestattet ist. Die Sensoranordnung 10 dient zum Überwachen eines technischen Systems des Schienenfahrzeugs 20, beispielsweise einer Bremsanlage 21.

Bei den zwei Sensoren S1 und S2 kann es sich beispielsweise um Temperatursensoren handeln, die die Temperatur der Bremsanlage 21, insbesondere eines Radlagers 22, messen und als Sensorsignale Temperatursignale erzeugen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, sofern sie unter die Ansprüche fallen.

### Bezugszeichenliste

- 10: Sensoranordnung
- 20: Schienenfahrzeug
- 21: Bremsanlage
- 22: Radlager
- 101: Recheneinrichtung
- 102: Speicher
- 301: Kurve
- 302: Kurve

- AWE: Auswerteinrichtung
- ESS: Eingabeschnittstelle
- Ms1: Sensorsignal
- Ms2: Sensorsignal
- S1: Sensor
- S2: Sensor
- SM: Softwaremodul
- t: Zeit
- T: Temperaturverlauf
- T0: Ausgangstemperatur
- Vw(S1): Vertrauenswert
- Vw(S2): Vertrauenswert
- Z: Zustandsangabe

## Patentansprüche

1. Verfahren zum Betreiben einer zumindest zwei Sensoren (S1, S2) und eine Auswerteinrichtung (AWE) aufweisenden Sensoranordnung (10) zum Überwachen eines technischen Systems, wobei die Auswerteinrichtung (AWE) dazu eingerichtet ist, die Sensorsignale (Msl, Ms2) der zumindest zwei Sensoren (S1, S2) auszuwerten,
**dadurch gekennzeichnet, dass**
- jedem der Sensoren (S1, S2) jeweils eine Vertrauensangabe (Vw(Sl), Vw(S2)) zugeordnet wird, die die Vertrauenswürdigkeit des Sensorsignals (Msl, Ms2) des jeweiligen Sensors (S1, S2) angibt, wobei die Vertrauensangaben (Vw(Sl), Vw(S2)) anhand des zeitlichen Verlaufs der Sensorsignale (Msl, Ms2) ermittelt und/oder aktualisiert werden, und wobei die Vertrauensangabe (Vw(Sl), Vw(S2)) anzeigt, ob der Sensor (S1, S2) als vertrauenswürdig anzusehen und dessen Sensorsignal (Msl, Ms2) verwertbar ist, der Sensor (S1, S2) als nicht vertrauenswürdig anzusehen und dessen Sensorsignal (Msl, Ms2) nichtverwertbar ist oder der Sensor (S1, S2) als eingeschränkt vertrauenswürdig anzusehen und dessen Sensorsignal (Msl, Ms2) eingeschränkt verwertbar ist, und
- die Auswerteinrichtung (AWE) eine den Zustand des Systems beschreibende Zustandsangabe (Z) ausschließlich auf der Basis der vertrauenswürdigen Sensoren (S1, S2) sowie derjenigen eingeschränkt vertrauenswürdigen Sensoren (S1, S2), die mindestens eine vorgegebene zusätzliche Bedingung erfüllen, erzeugt.

2. Verfahren nach Anspruch 1,
**dadurch gekennzeichnet, dass** die Vertrauensangaben (Vw(Sl), Vw(S2)) regelmäßig oder unregelmäßig, insbesondere stochastisch, neu ermittelt und/oder aktualisiert werden.

3. Verfahren nach einem der voranstehenden Ansprüche,
**dadurch gekennzeichnet, dass** die Vertrauensangaben (Vw(Sl), Vw(S2)) anhand des zeitlichen Verlaufs der Sensorsignale (Msl, Ms2) relativ im Vergleich zueinander und/oder unter Berücksichtigung des jeweiligen Systemzustands des Systems bei der Aufnahme des zeitlichen Verlaufs neu ermittelt und/oder aktualisiert werden.

4. Verfahren nach einem der voranstehenden Ansprüche,
**dadurch gekennzeichnet, dass** die mindestens eine vorgegebene zusätzliche Bedingung oder eine der vorgegebenen zusätzlichen Bedingungen als erfüllt angesehen wird, wenn vor dem Auftreten eines ein vorgegebenes Kontrollkriterium erfüllenden Sensorsignals (Msl, Ms2) die Vertrauensangabe (Vw(Sl), Vw(S2)) des jeweiligen Sensors (S1, S2) ein Ansteigen der Vertrauenswürdigkeit für eine vorgegebene Prüfzeitspanne vor dem Auftreten dieses Sensorsignals (Msl, Ms2), also des das Erfüllen des Kontrollkriteriums anzeigenden Sensorsignals (Msl, Ms2), anzeigt.

5. Verfahren nach einem der voranstehenden Ansprüche,
**dadurch gekennzeichnet, dass** die mindestens eine vorgegebene zusätzliche Bedingung oder eine der vorgegebenen zusätzlichen Bedingungen als erfüllt angesehen wird, wenn nach dem Auftreten eines ein vorgegebenes Kontrollkriterium erfüllenden Sensorsignals (Msl, Ms2) die Vertrauensangabe (Vw(Sl), Vw(S2)) des jeweiligen Sensors (S1, S2) ein Ansteigen der Vertrauenswürdigkeit für eine vorgegebene Mindestzeitspanne nach dem Auftreten dieses Sensorsignals (Msl, Ms2), also des das Erfüllen des Kontrollkriteriums anzeigenden Sensorsignals (Msl, Ms2), anzeigt.

6. Verfahren nach einem der voranstehenden Ansprüche,
**dadurch gekennzeichnet, dass** die mindestens eine vorgegebene zusätzliche Bedingung oder eine der vorgegebenen zusätzlichen Bedingungen als erfüllt angesehen wird, wenn nach dem Auftreten eines ein vorgegebenes Kontrollkriterium erfüllenden Sensorsignals (Ms1, Ms2) die Vertrauensangabe (Vw(Sl), Vw(S2)) des jeweiligen Sensors (S1, S2) ansteigt und innerhalb einer vorgegebenen Mindestzeitspanne eine vorgegebene Mindestvertrauensschwelle erreicht.

7. Verfahren nach Anspruch 6,
**dadurch gekennzeichnet, dass** die vorgegebene Mindestvertrauensschwelle diejenige Schwelle ist, ab der der Sensor (S1, S2) als vertrauenswürdig angesehen wird.

8. Verfahren nach einem der voranstehenden Ansprüche,
d a dur c h **gekennzeichnet**, dass die mindestens eine vorgegebene zusätzliche Bedingung oder eine der vorgegebenen zusätzlichen Bedingungen als erfüllt angesehen wird, wenn nach Auftreten eines ein vorgegebenes Kontrollkriterium erfüllenden Sensorsignals (Ms1, Ms2) das Sensorsignal das Kontrollkriterium innerhalb einer vorgegebenen Mindestzeitspanne danach weiterhin oder zumindest innerhalb der vorgegebenen Mindestzeitspanne wiederholt erfüllt.

9. Verfahren nach einem der voranstehenden Ansprüche,
d a dur c h **gekennzeichnet**, dass die vorgegebene Mindestzeitspanne eine Gefahrenzeitspanne des technischen Systems ist, innerhalb derer nach Erkennen einer Gefahrensituation, insbesondere nach Erfüllung des vorgegebenen Kontrollkriteriums, eine Nothandlung vorzunehmen ist, oder die vorgegebene Mindestzeitspanne eine Teilzeitspanne dieser Gefahrenzeitspanne ist.

10. Verfahren nach einem der voranstehenden Ansprüche,
**dadurch gekennzeichnet, dass**
- die Auswerteinrichtung (AWE) eine Eingabeschnittstelle (ESS) aufweist, an der ein Sollmesswert für einen, mehrere oder alle Sensoren (S1, S2) der Sensoranordnung (10) eingebbar ist, und
- die Auswerteinrichtung (AWE) anhand des Sollmesswerts die Vertrauensangabe (Vw(Sl), Vw(S2)) für den oder die jeweiligen Sensoren (S1, S2) neu berechnet oder aktualisiert.

11. Verfahren nach einem der voranstehenden Ansprüche,
**dadurch gekennzeichnet, dass**
- die Auswerteinrichtung (AWE) eine Eingabeschnittstelle (ESS) aufweist, an der eine Vertrauensangabe (Vw(Sl), Vw(S2)) für einen, mehrere oder alle Sensoren (S1, S2) der Sensoranordnung (10) eingebbar ist, und
- die Auswerteinrichtung (AWE) den jeweiligen Sensoren (S1, S2) die eingegebene Vertrauensangabe (Vw(Sl), Vw(S2)) zuordnet.

12. Verfahren nach einem der voranstehenden Ansprüche,
d a dur c h **gekennzeichnet**, dass die Auswerteinrichtung (AWE) eine lernende Recheneinrichtung (101) ist oder aufweist, die die Ermittlung der Vertrauensangaben (Vw(Sl), Vw(S2)) unter Berücksichtung einer fest vorgegebenen Plausibilisierungsstrategie und/oder unter Berücksichtung einer selbst ermittelten Plausibilisierungsstrategie durchführt.

13. Verfahren nach einem der voranstehenden Ansprüche,
**dadurch gekennzeichnet, dass**
- das technische System eine Bremsanlage (21) eines Fahrzeugs ist und/oder
- die zumindest zwei Sensoren (S1, S2) Temperatursensoren sind, die die Temperatur der Bremsanlage (21) oder eines anderen Teils des Fahrzeugs, insbesondere eines Achs- oder Radlagers (22), das einen von der Bremsanlage (21) bremsbaren Radsatz oder ein von der Bremsanlage (21) bremsbares Rad des Fahrzeugs lagert, misst und als Sensorsignal (Ms1, Ms2) ein Temperatursignal erzeugt, und/oder
- das Kontrollkriterium eine Temperaturangabe ist und/oder
- das Kontrollkriterium eine Temperaturangabe ist, die eine für ein Achs- oder Radlager (22) maximal erlaubte Grenztemperatur angibt.

14. Sensoranordnung (10) mit zumindest zwei Sensoren (S1, S2) und einer Auswerteinrichtung (AWE) zum Überwachen eines technischen Systems, wobei die Auswerteinrichtung (AWE) dazu eingerichtet ist, die Sensorsignale (Ms1, Ms2) der zumindest zwei Sensoren (S1, S2) auszuwerten,
**dadurch gekennzeichnet, dass**
- die Auswerteinrichtung (AWE) dazu ausgebildet ist, jedem der Sensoren (S1, S2) jeweils eine Vertrauensangabe (Vw(Sl), Vw(S2)) zuzuordnen, die die Vertrauenswürdigkeit des Sensorsignals (Ms1, Ms2) des Sensors (S1, S2) angibt, wobei die Vertrauensangaben (Vw(Sl), Vw(S2)) anhand des zeitlichen Verlaufs der Sensorsignale (Ms1, Ms2) ermittelt und/oder aktualisiert werden, und wobei die Vertrauensangabe (Vw(Sl), Vw(S2)) anzeigt, ob der Sensor (S1, S2) als vertrauenswürdig anzusehen und dessen Sensorsignal (Msl, Ms2) verwertbar ist, der Sensor (S1, S2) als nicht vertrauenswürdig anzusehen und dessen Sensorsignal (Ms1, Ms2) nichtverwertbar ist oder der Sensor (S1, S2) als eingeschränkt vertrauenswürdig anzusehen und dessen Sensorsignal (Ms1, Ms2) eingeschränkt verwertbar ist, und
- die Auswerteinrichtung (AWE) außerdem dazu ausgebildet ist, eine den Zustand des Systems beschreibende Zustandsangabe (Z) ausschließlich auf der Basis der vertrauenswürdigen Sensoren (S1, S2) sowie derjenigen eingeschränkt vertrauenswürdigen Sensoren (S1, S2), die mindestens eine vorgegebene zusätzliche Bedingung erfüllen, zu erzeugen.

15. Fahrzeug, insbesondere Schienenfahrzeug (20),
**dadurch gekennzeichnet, dass** das Fahrzeug mit einer Sensoranordnung (10) nach Anspruch 14 ausgestattet ist und die Sensoranordnung (10) ein technisches System des Fahrzeugs, insbesondere eine Bremsanlage (21) des Fahrzeugs, ist.

## Claims

1. Method for operating a sensor arrangement (10) having at least two sensors (S1, S2) and an evaluation facility (AWE) for monitoring a technical system, wherein the evaluation facility (AWE) is designed to evaluate the sensor signals (Msl, Ms2) of the at least two sensors (S1, S2),
**characterised in that**
- a trust indication (Vw(Sl), Vw(S2)) is assigned to each of the sensors (S1, S2) in each case, said trust indication indicating the trustworthiness of the sensor signal (Msl, Ms2) of the respective sensor (S1, S2), wherein the trust indications (Vw(Sl), Vw(S2)) are determined and/or updated on the basis of the temporal course of the sensor signals (Msl, Ms2), and wherein the trust indication (Vw(Sl), Vw(S2)) indicates whether the sensor (S1, S2) is to be considered as trustworthy and its sensor signal (Msl, Ms2) is usable, the sensor (S1, S2) is not to be considered as trustworthy and its sensor signal (Msl, Ms2) is not usable, or the sensor (S1, S2) is to be considered as trustworthy to a restricted degree and its sensor signal (Msl, Ms2) is usable to a restricted degree, and
- the evaluation facility (AWE) generates a status indication (Z) describing the status of the system exclusively on the basis of the trustworthy sensors (S1, S2) as well as those sensors (S1, S2) which are trustworthy to a restricted degree and which fulfil at least one predetermined additional condition.

2. Method according to claim 1,
**characterised in that**
the trust indications (Vw(Sl), Vw(S2)) are redetermined and/or updated regularly or irregularly, in particular stochastically.

3. Method according to one of the preceding claims,
**characterised in that**
the trust indications (Vw(Sl), Vw(S2)) are redetermined and/or updated on the basis of the temporal course of the sensor signals (Msl, Ms2) in a relative comparison to one another and/or by taking into account the respective system status of the system while assuming the temporal course.

4. Method according to one of the preceding claims,
**characterised in that**
the at least one predetermined additional condition or one of the predetermined additional conditions is considered to be fulfilled if, before a sensor signal (Msl, Ms2) fulfilling a predetermined control criterion occurs, the trust indication (Vw(Sl), Vw(S2)) of the respective sensor (S1, S2) indicates an increase in the trustworthiness for a predetermined test period before this sensor signal (MS1, Ms2) occurs, in other words of the sensor signal (Msl, Ms2) indicating fulfilment of the control criterion.

5. Method according to one of the preceding claims,
**characterised in that**
the at least one predetermined additional condition or one of the predetermined additional conditions is considered to be fulfilled if, after a sensor signal (Msl, Ms2) fulfilling a predetermined control criterion occurs, the trust indication (Vw(Sl), Vw(S2)) of the respective sensor (S1, S2) indicates an increase in the trustworthiness for a predetermined minimum period after this sensor signal (Msl, Ms2) occurs, in other words of the sensor signal (Msl, Ms2) indicating fulfilment of the control criterion.

6. Method according to one of the preceding claims,
**characterised in that**
the at least one predetermined additional condition or one of the predetermined additional conditions is considered to be fulfilled if, after a sensor signal (Msl, Ms2) fulfilling a predetermined control criterion occurs, the trust indication (Vw(Sl), Vw(S2)) of the respective sensor (S1, S2) increases and reaches a predetermined minimum trust threshold within a predetermined minimum period.

7. Method according to claim 6,
**characterised in that**
the predetermined minimum trust threshold is the threshold above which the sensor (S1, S2) is considered to be trustworthy.

8. Method according to one of the preceding claims,
**characterised in that**
the at least one predetermined additional condition or one of the predetermined additional conditions is considered to be fulfilled if, after a sensor signal (Msl, Ms2) fulfilling a predetermined control criterion occurs, the sensor signal (Msl, Ms2) continues to fulfil the control criterion within a predetermined minimum period thereafter or at least repeatedly fulfils the control criterion within the predetermined minimum period.

9. Method according to one of the preceding claims,
**characterised in that**
the predetermined minimum period is a period of danger in the technical system within which, after a dangerous situation has been identified, in particular after the predetermined control criterion has been fulfilled, emergency action is to be performed or the predetermined minimum period is a sub period of this period of danger.

10. Method according to one of the preceding claims,
**characterised in that**
- the evaluation facility (AWE) has an input interface (ESS) at which a target measured value can be entered for one, a number of or all sensors (S1, S2) of the sensor arrangement (10), and
- the evaluation facility (AWE) recalculates or updates the trust indication (Vw(Sl), V2(S2)) for the sensor or the respective sensors (S1, S2) on the basis of the target measured value.

11. Method according to one of the preceding claims,
**characterised in that**
- the evaluation facility (AWE) has an input interface (ESS) at which a trust indication (Vw(Sl), Vw(S2)) can be entered for one, a number of or all sensors (S1, S2) of the sensor arrangement (10), and
- the evaluation facility (AWE) assigns the input trust indication (Vw(Sl), Vw(S2)) to the respective sensors (S1, S2).

12. Method according to one of the preceding claims,
**characterised in that**
the evaluation facility (AWE) is or has a learning computing facility (101), which carries out the determination of the trust indications (Vw(Sl), Vw(S2)) while taking into account a fixedly predetermined plausibility strategy and/or while taking into account a self-determined plausibility strategy.

13. Method according to one of the preceding claims,
**characterised in that**
- the technical system is a braking system (21) of a vehicle, and/or
- the at least two sensors (S1, S2) are temperature sensors, which measures the temperature of the braking system (21) or another part of the vehicle, in particular an axle bearing or wheel bearing (22), which supports a wheel set which can be braked by the braking system (21) or a wheel of the vehicle which can be braked by the braking system (21) and generates a temperature signal as a sensor signal (Msl, Ms2) and/or
- the control criterion is a temperature indication and/or the control criterion is a temperature indication which indicates a maximum permitted limit temperature for an axle bearing or wheel bearing (22).

14. Sensor arrangement (10) with at least two sensors (S1, S2) and an evaluation facility (AWE) for monitoring a technical system, wherein the evaluation facility (AWE) is designed to evaluate the sensor signals (Msl, Ms2) of the at least two sensors (S1, S2),
**characterised in that**
- the evaluation facility (AWE) is designed to assign a trust indication (Vw(Sl), Vw(S2)) to each of the sensors (S1, S2) in each case, said trust indication indicating the trustworthiness of the sensor signal (Msl, Ms2) of the sensor (S1, S2), wherein the trust indications (V2(S1), Vw(S2)) are determined and/or updated on the basis of the temporal course of the sensor signals (Msl, MS2), and wherein the trust indication (Vw(S1, Vw(S2)) indicates whether the sensor (S1, S2) is to be considered as trustworthy and its sensor signal (Msl, Ms2) is usable, the sensor (S1, S2) is to be considered as not trustworthy and its sensor signal (S1, S2) is not usable, or the sensor (S1, S2) is to be considered as trustworthy to a restricted degree and its sensor signal (Msl, Ms2) is usable to a restricted degree, and
- the evaluation facility (AWE) is moreover embodied to generate a status indication (Z) describing the status of the system exclusively on the basis of the trustworthy sensors (S1, S2) as well as those sensors (S1, S2) which are trustworthy to a restricted degree and which fulfil at least one predetermined additional condition.

15. Vehicle, in particular rail vehicle (20),
**characterised in that**
the vehicle is equipped with a sensor arrangement (10) according to claim 14, and the sensor arrangement (10) is a technical system of the vehicle, in particular a braking system (21) of the vehicle.

## Revendications

1. Procédé pour faire fonctionner un ensemble (10) capteur comportant au moins deux capteurs (S1, S2) et un dispositif (AWE) d'analyse pour le contrôle d'un système technique, dans lequel le dispositif (AWE) d'analyse est conçu pour analyser les signaux (Msl, Ms2) de capteur des au moins deux capteurs (S1, S2),
**caractérisé en ce que**
- à chacun des capteurs (S1, S2), on affecte respectivement une indication (Vw(Sl), Vw(S2)) de confiance, qui indique que le signal (Msl, Ms2) du capteur (S1, S2) respectif est digne de confiance, dans lequel on détermine et/ou on met à jour les indications (Vw(Sl), Vw(S2)) de confiance, à l'aide de la courbe en fonction du temps des signaux (Msl, Ms2) des capteurs, et dans lequel l'indication (Vw(Sl), Vw(S2)) de confiance indique si le capteur (S1, S2) peut être considéré comme digne de confiance et si son signal (Msl, Ms2) de capteur peut être valorisé, si le capteur (S1, S2) ne peut pas être comme digne de confiance et si son signal (Msl, Ms2) de capteur ne peut pas être valorisé ou si le capteur (S1, S2) peut être considéré comme digne de confiance d'une manière limitée et si son signal (Msl, Ms2) de capteur peut être valorisé de manière limitée, et
- le dispositif (AWE) d'analyse produit une indication (Z) d'état décrivant l'état du système exclusivement sur la base des capteurs (S1, S2) dignes de confiance, ainsi que des capteurs (S1, S2) dignes de confiance de manière limitée, qui satisfont au moins une condition supplémentaire donnée à l'avance.

2. Procédé suivant la revendication 1,
**caractérisé en ce que**
l'on redétermine et/ou l'on remet à jour les indications (Vw(Sl), Vw(S2)) de confiance régulièrement ou irrégulièrement, notamment stochastiquement.

3. Procédé suivant l'une des revendications précédentes,
**caractérisé en ce que**
l'on redétermine et/ou l'on remet à jour les indications (Vw(Sl), Vw(S2)) de confiance, à l'aide de la courbe en fonction du temps des signaux (Msl, Ms2) des capteurs relativement en comparaison l'un par rapport à l'autre et/ou en tenant compte de l'état respectif du système à l'enregistrement de la courbe en fonction du temps.

4. Procédé suivant l'une des revendications précédentes,
**caractérisé en ce que**
l'on considère la au moins une condition supplémentaire donnée à l'avance ou l'une des conditions supplémentaires données à l'avance comme satisfaite si, avant l'apparition d'un signal (Msl, Ms2) de capteur satisfaisant un critère de contrôle donné à l'avance, l'indication (Vw(Sl), Vw(S2)) de confiance du capteur (S1, S2) respectif indique une augmentation que le capteur est digne de confiance, pendant un laps de temps de commande donné à l'avance avant l'apparition du signal (Msl, Ms2) de commande, donc du signal (Msl, Ms2) de capteur indiquant que le critère de commande est satisfait.

5. Procédé suivant l'une des revendications précédentes,
**caractérisé en ce que**
l'on considère comme satisfaite la au moins une condition supplémentaire donnée à l'avance ou l'une des conditions supplémentaires données à l'avance si, après l'apparition d'un signal (Msl, Ms2) de capteur satisfaisant un critère de contrôle donné à l'avance, l'indication (Vw(Sl), Vw(S2)) de confiance du capteur (S1, S2) respectif indique une augmentation qu'il est digne de confiance pendant un laps de temps minimum donné à l'avance, après l'apparition de ce signal (Msl, Ms2) de capteur, donc du signal (Msl, Ms2) de capteur indiquant que le critère de contrôle est satisfait.

6. Procédé suivant l'une des revendications précédentes,
**caractérisé en ce que**
l'on considère que la au moins une condition donnée à l'avance ou l'une des conditions supplémentaires données à l'avance est satisfaite si, après l'apparition d'un signal (Msl, Ms2) de capteur satisfaisant un critère de commande donné à l'avance, l'indication (Vw(Sl), Vw(S2)) de confiance du capteur (S1, S2) respectif augmente et atteint, dans un laps de temps minimum donné à l'avance, un seuil de confiance minimum donné à l'avance.

7. Procédé suivant la revendication 6,
**caractérisé en ce que**
le seuil de confiance minimum donné à l'avance est le seuil à partir duquel on considère que le capteur (S1, S2) est digne de confiance.

8. Procédé suivant l'une des revendications précédentes,
**caractérisé en ce que**
l'on considère la au moins une condition supplémentaire donnée à l'avance ou l'une des conditions supplémentaires données à l'avance comme satisfaite si, après l'apparition d'un signal (Msl, Ms2) de capteur satisfaisant un critère de contrôle donné à l'avance, le signal de capteur satisfait à nouveau le critère de contrôle dans un laps de temps minimum donné à l'avance ensuite ou au moins dans le laps de temps minimum donné à l'avance.

9. Procédé suivant l'une des revendications précédentes,
**caractérisé en ce que**
le laps de temps minimum donné à l'avance est un laps de temps de danger du système technique, dans lequel, après la détection d'une situation de danger, en particulier après que le critère de commande donné à l'avance est satisfait, il est effectué une manipulation d'urgence, ou le laps de temps minimum donné à l'avance est un laps de temps partiel de ce laps de temps de danger.

10. Procédé suivant l'une des revendications précédentes,
**caractérisé en ce que**
- le dispositif (AWE) d'analyse a une interface (ESS) d'entrée où une valeur de mesure de consigne de l'un ou de plusieurs ou de tous les capteurs (S1, S2) de l'ensemble (10) de capteurs peut être entrée, et
- le dispositif (AWE) d'analyse recalcule ou remet à jour, à l'aide de la valeur de mesure de consigne, l'indication (Vw(Sl), Vw(S2)) de confiance pour le au les capteurs (S1, S2) respectifs.

11. Procédé suivant l'une des revendications précédentes,
**caractérisé en ce que**
- le dispositif (AWE) d'analyse a une interface (ESS) d'entrée où une indication (Vw(Sl), Vw(S2)) de confiance pour l'un, plusieurs ou tous les capteurs (S1, S2) de l'ensemble (10) de capteurs peut être entrée, et
- le dispositif (AWE) d'analyse affecte l'indication (Vw(Sl), Vw(S2)) de confiance entrée aux capteurs (S1, S2) respectifs.

12. Procédé suivant l'une des revendications précédentes,
**caractérisé en ce que**
le dispositif (AWE) d'analyse est ou a un dispositif (101) informatique d'apprentissage, qui effectue la détermination des indications (Vw(Sl), Vw(S2)) de confiance en tenant compte d'une stratégie de vraisemblance donnée à l'avance de manière fixe et/ou en tenant compte d'une stratégie de vraisemblance déterminée de manière autonome.

13. Procédé suivant l'une des revendications précédentes,
**caractérisé en ce que**
- le système technique est une installation (21) de frein d'un véhicule et/ou
- les au moins deux capteurs (S1, S2) sont des capteurs de température, qui mesurent la température de l'installation (21) de frein ou d'une autre partie du véhicule, en particulier d'un roulement (22) d'essieu ou de roue, qui supporte un ensemble de roues pouvant être freinées par l'installation (21) de frein ou une roue du véhicule pouvant être freinée par l'installation (21) de frein, et produit un signal de température comme signal (Msl, Ms2) de capteur, et/ou
- le critère de contrôle est une indication de température, et/ou
- le critère de contrôle est une indication de température, qui indique une température limite autorisée au maximum pour un roulement (22) d'essieu ou de roue.

14. Ensemble (10) capteur comprenant au moins deux capteurs (S1, S2) et un dispositif (AWE) d'analyse pour le contrôle d'un système technique, dans lequel le dispositif (AWE) d'analyse est conçu pour analyser les signaux (Msl, Ms2) de capteur des au moins deux capteurs (S1, S2),
**caractérisé en ce que**
- le dispositif (AWE) d'analyse est constitué pour affecter à chacun des capteurs (S1, S2) respectivement une indication (Vw(Sl), Vw(S2)) de confiance, qui indique que le signal (Msl, Ms2) du capteur (S1, S2) respectif est digne de confiance, dans lequel on détermine et/ou on met à jour les indications (Vw(Sl), Vw(S2)) de confiance, à l'aide de la courbe en fonction du temps des signaux (Msl, Ms2) des capteurs, et dans lequel l'indication (Vw(Sl), Vw(S2)) de confiance indique si le capteur (S1, S2) peut être considéré comme digne de confiance et si son signal (Msl, Ms2) de capteur peut être valorisé, si le capteur (S1, S2) ne peut pas considéré comme digne de confiance et si son signal (Msl, Ms2) de capteur ne peut pas être valorisé ou si le capteur (S1, S2) peut être considéré comme digne de confiance d'une manière limitée et si son signal (Msl, Ms2) de capteur peut être valorisé de manière limitée, et
- le dispositif (AWE) d'analyse est constitué en outre pour produire une indication (Z) d'état décrivant l'état du système exclusivement sur la base des capteurs (S1, S2) dignes de confiance, ainsi que des capteurs (S1, S2) dignes de confiance de manière limitée, qui satisfont au moins une condition supplémentaire donnée à l'avance.

15. Véhicule, notamment véhicule (20) ferroviaire,
**caractérisé en ce que**
le véhicule est équipé d'un ensemble (10) capteur suivant la revendication 14 et l'ensemble (10) capteur est un système technique du véhicule, en particulier une installation (21) de frein du véhicule.
